# EUROPEAN PATENT APPLICATION

(11) **EP 1 882 583 A1**
(43) Date of publication of application: **30.01.2008**
(21) Application number: 06756611.7
(22) Date of filing: 19.05.2006
(51) Int. Cl.: B32B 15/082, B32B 15/08, B32B 27/00, C09D 5/00, C09D 7/14, C09D 127/18, C09D 127/20, C09D 181/06, C23C 26/00, C23C 28/00, F02M 61/18

(54) **PARTS WITH OIL-REPELLENT LAYERS AND PROCESS FOR PRODUCTION THEREOF**

(30) Priority: 20.05.2005 JP 2005148378
(71) Applicant: TOYOTA JIDOSHA KABUSHIKI KAISHA, Toyota-shi Aichi 471-8571 (JP)
(72) Inventor: SHIRATANI, Kazuhiko, TOYOTA JIDOSHA KABUSHIKI KAISHA, Toyota-shi, Aichi 4718571 (JP); MIYAZAKI, Syoji, TOYOTA JIDOSHA KABUSHIKI KAISHA, Toyota-shi, Aichi 4718571 (JP); SAKAMOTO, Katsumi, TOYO DRILUBE CO., LTD., Aiko-gun, Kanagawa 2430308 (JP); KOBAYASHI, Akihito, TOYO DRILUBE CO., LTD., Ota-shi, Gunma 3730044 (JP)
(74) Representative: Kuhnen & Wacker
(86) International application number: PCT/JP2006/310511
(87) International publication number: WO 2006/123840

(57) **Abstract**

A part provided with an oil-repellent coating having an oil repellency great enough to enable droplets of fuel and lubricating oil to quickly slide off from the surface in the vicinity of an injection port of a fuel injector and a method of production of the same are provided. A part 10 comprised of a metal base material 12 on the surface of which an oil-repellent coating 14 is provided, said part provided with an oil-repellent coating **characterized in that** said oil-repellent coating 14 is constituted by a bottom layer 16 of PES (polyether sulfone) adhered to a surface of the base material and a top layer 18 formed by dispersion of discrete phases 22 of FEP (tetrafluoroethylene-hexafluoropropylene copolymer) in a continuous phase 20 of PES integrally formed with the PES of the bottom layer 16 and in that the top layer 18 is exposed as the surface of the oil-repellent coating 14. A weight ratio PES wt%:FEP wt% of PES and PEP which form the oil-repellent coating 14 is preferably 40:60 to 80:20, more preferably 60:40 to 75:25. Preferably, the surface of the base material 12 is roughened so as to raise adhesion with the bottom layer 16 of PES.

## Description

### TECHNICAL FIELD

The present invention relates to parts provided with oil-repellent coatings and a method of production of the same. The present invention is particularly useful for preventing formation of deposits derived from gasoline, diesel oil, lubricating oil, and other oily substances in an internal combustion engine.

### BACKGROUND ART

In an automobile engine or other internal combustion engine, droplets of atomized fuel or lubricating oil sometimes stick near injection ports of fuel injectors. These droplets are thermally broken down at a high temperature in the combustion chambers to form deposits. If these end up blocking even parts of the injection ports, the injection characteristics of the injectors are remarkably impaired and normal operation of the engine is detrimentally affected.

In order to prevent the formation of deposits, it is necessary to make the droplets of fuel and lubricating oil from which these are derived slide off quickly without sticking there.

For this purpose, it is effective to impart a high oil repellency to the surfaces near the injection ports where the droplets stick. The same is true for imparting water repellency for preventing water droplets from sticking from the viewpoint that both of them repel liquids.

For imparting water repellency, for example, Japanese Patent No. 3340377 proposes a printing plate suitable for waterless offset printing having water absorbing areas having 150° or more contact angles with respect to water (made of CF, CF₂, or CF₃) and water repelling areas (NHCO and O cross-linked via cyclic chains) having 70° or less contact angles with respect to water.

However, since the medium composing the droplets is not water, but oil, oil repellency cannot be achieved as an extension of just imparting water repellency.

Namely, in order for the surface of a base material to exhibit liquid repellency, the surface tension of the surface of the base material must be sufficiently small in comparison with the surface tension of the medium composing the droplets. When the medium is the water, the surface tension is 70 dyne/cm, but in comparison with this when it is gasoline, diesel oil, a lubricating oil, or another oily substance covered by the present invention, the surface tension is 17 to 22 dyne/cm or far smaller than that of the water. Accordingly, selection of a water repelling film material having a sufficiently smaller surface tension than 70 dyne/cm for imparting water repellency is relatively easy, but selection of an oil repelling film material having a surface tension sufficiently smaller than 17 to 22 dyne/cm for imparting oil repellency is actually very difficult.

For this reason, conventionally, it was not possible to impart an oil repellency great enough for making droplets of fuel and lubricating oil smoothly slide off from the surfaces at the vicinities of the injection ports of fuel injectors.

Namely, as an example of forming an oil repelling film, Japanese Patent Publication (A) No. 2004-211851 discloses a dynamic pressure bearing device formed with oil repelling film (ETFE, PVF, PVDF, ECTFE, PCTFE, PFA, PTFE, or FEP), Japanese Patent Publication (A) No. 09-210513 discloses a refrigeration cycle forming oil repelling films on inner wall surfaces of refrigerant tubes of a condenser and an evaporator and refrigerant piping on the intake side of a compressor to thereby prevent lubricating oil of the compressor from being deposited on the tubes of a heat exchange portion, and Japanese Patent Publication (A) No. 2004-044452 discloses a supercharger forming oil repelling films at parts near a seal plate and parts near a housing facing each other across a diffuser channel of the supercharger to thereby prevent the deposition of oil mist and the formation of a carbonized layer, but none of these publications are effective for preventing sticking of oil droplets at the fuel injectors of an internal combustion engine.

Further, Japanese Patent Publication (A) No. 2003-065336 discloses a fluid bearing device roughening the surface of an area to be coated with an oil repelling agent more than the surface of a shaft or rotating body on which the oil repelling agent is not coated, while Japanese Patent Publication No. 2004-239346 discloses forming the areas where the oil repelling film is to be formed with a rougher surface roughness than that of the bearing surface forming a fluid dynamic pressure bearing so as to prevent the oil repelling film from peeling off, but both of these publications are for improving the adhesion of the oil repelling film with respect to the base material. Neither considers the use of an oil repelling film itself for prevention of sticking of oil droplets at the fuel injectors of an internal combustion engine.

### DISCLOSURE OF THE INVENTION

An object of the present invention is to provide a part provided with an oil-repellent coating having an oil repellency great enough to make droplets of fuel and lubricating oil smoothly slide off the surface at the vicinity of an injection port of a fuel injector and a method of production of the same.

To attain the above object, according to the present invention, there is provided a part comprised of a metal base material on the surface of which an oil-repellent coating is provided, said part characterized in that
said oil-repellent coating is constituted by a bottom layer of PES (polyether sulfone) adhered to a surface of the base material and a top layer formed by a dispersion of discrete phases of FEP (tetrafluoroethylene-hexafluoropropylene copolymer) in a continuous phase of PES integrally formed with the PES of the bottom layer and in that the top layer is exposed as the surface of the oil-repellent coating.

Preferably, a weight ratio PES wt%:FEP wt% of the PES and FEP forming said oil-repellent coating is 40:60 to 80:20, more further preferably 60:40 to 75:25.

Preferably, the surface of said base material is roughened so as to raise the adhesion with the bottom layer of said PES.

According to the present invention, there is further provided with a method of production of such a part of the present invention comprising a method of production of a part provided with an oil-repellent coating characterized by including:
a step of dissolving a PES powder in an organic solvent to prepare a PES solution;
a step of dispersing an FEP powder in an organic solvent to prepare an FEP dispersion;
a step of mixing said PES solution and said FEP dispersion to prepare a coating forming solution;
a step of filtering said coating forming solution;
a step of coating said filtered coating forming solution on the surface of the metal base material to form a coating;
a step of applying primary firing to said coating to remove the solvent in the coating by evaporation and curing the PES in the coating; and
a step of applying secondary firing to said primary fired coating to soften the FEP in the coating and cause the fluid from a bottom part to a top part of the coating to thereby form an oil-repellent coating constituted by a bottom layer made of said PES and a top layer in which discrete phases of FEP are dispersed in a continuous phase of said PES integrally formed with the PES of the bottom layer and having the top layer exposed as the surface.

In said production method, preferably a mixing ratio of said PES solution and said FEP dispersion is controlled so that a weight ratio PES wt%:FEP wt% in the obtained coating forming solution becomes 40:60 to 80:20, more further preferably the mixing ratio is controlled so as to become 60:40 to 75:25.

In the method of the present invention, preferably the secondary firing is carried out at a temperature of 350°C or more.

In the method of the present invention, preferably the method comprises roughening the surface of said metal base material, then coating said coating forming solution. Preferably, said roughening is carried out by shot blasting or shot blasting, then chemical etching.

The oil-repellent coating provided in a part of the present invention is constituted by a bottom layer of PES adhering to the surface of the base material and a top layer formed by dispersion of discrete phases of FEP in a continuous phase of PES integrally formed with the PES of the bottom layer, and the top layer is exposed as the surface of the oil-repellent coating.

Accordingly, the surface of the oil-repellent coating of the present invention is constituted by FEP discrete phases exposed and dispersed from the surface of the PES continuous phase. The high oil repellency of the FEP (tetrafluoroethylene-hexafluoropropylene copolymer) causes oil droplets to be lifted up from the surface and simultaneously the high lipophilicity of the PES (polyether sulfone) causes oil droplets to be pulled away and slid off.

In this way, the characteristic feature of the present invention resides in the point that the oil-repellent coating is not constituted by only the oil-repelling FEP, but has the conversely lipophilic PES copresent.

In the present invention, the reason why the oil-repellent coating is not formed by just the oil-repelling FEP is that gasoline, diesel oil, lubricating oil, and other oily substance have a surface tension far smaller than that of the water as mentioned before. Namely, this is because while FEP has a high liquid repellency, it cannot give a strong oil repelling effect comparable to the water repelling effect with respect to water having a large surface tension. With FEP alone, a sufficient action causing oil droplets to slide off cannot be obtained.

To deal with this, the inventors performed various experiments and as a result obtained the new discovery that if combining the lipophilic PES with the oil-repelling FEP, a slide off effect which could not be obtained by FEP alone can be obtained by the co-action of the oil droplet liftoff action of the oil-repelling FEP and the oil droplet pulling action of the lipophilic PES as mentioned before and thereby completed the present invention.

Further, in the oil-repellent coating of the present invention, the PES of the bottom layer and the PES continuous phase of the top layer are integrally formed. Simultaneously, the PES bottom layer adheres to the base material. Therefore, the oil-repellent coating is strong as a whole and, at the same time, the adhesion with respect to the metal base material is good.

In addition, both of the FEP and the PES forming the oil-repellent coating of the present invention have high heat resistances, therefore the oil-repellent coating is provided with a sufficiently high heat resistance for application to fuel injectors of an internal combustion engine of an automobile engine etc.

Further, the FEP and the PES forming the oil-repellent coating of the present invention do not have a phase-solubility, therefore they are clearly separated into two phases in the primary firing and the secondary firing performed when producing the oil-repellent coating of the present invention, so the top layer formed by the dispersion of the FEP discrete phases in the PES continuous phase can be stably formed.

The method of production of the present invention mixes the PES solution and the FEP dispersion to form a homogeneous coating forming solution and coats it on the base material, then performs the primary and/or secondary firing, therefore the two-phase separation (or precipitation) evenly occurs at many sites in the coating at the surface of the base material, therefore an extremely high density and high dispersion two phase FEP/PES structure is obtained.

### BRIEF DESCRIPTION OF THE DRAWINGS

FIG. 1 is a cross-sectional view of a part provided with an oil-repellent coating according to a preferred embodiment of the present invention.
FIG. 2 is a plan view when viewing the oil-repellent coating of the part shown in FIG. 1 from the surface.
FIG. 3 shows the structures of (1) PES (polyether sulfone) and (2) FEP (tetrafluoroethylene-hexafluoropropylene copolymer) forming the oil-repellent coating of the present invention.
FIG. 4 is a flow chart showing the steps of production of a part equipped with an oil-repellent coating according to the present invention.
FIG. 5 is an elevation view showing a slide off angle measurement test apparatus.
FIG. 6 is a graph showing a relationship between a PES ratio of the oil-repellent coating and the slide off angle of diesel oil.
FIG. 7 is a graph showing the relationship between a secondary firing temperature at the time of the formation of the oil-repellent coating and the slide off angles of oily media.
FIG. 8 is a graph showing slide off angles of oily media in a case where the FEP ingredient of the oil-repellent coating of the present invention is replaced by another type of fluorocarbon.
FIG. 9 is a graph showing a high temperature durability of the oil-repellent coating of the present invention for each oily medium.
FIG. 10 is a graph showing a heat shock resistance of the oil-repellent coating of the present invention for a time of water cooling and a time of air cooling.

### BEST MODE FOR CARRYING OUT THE INVENTION

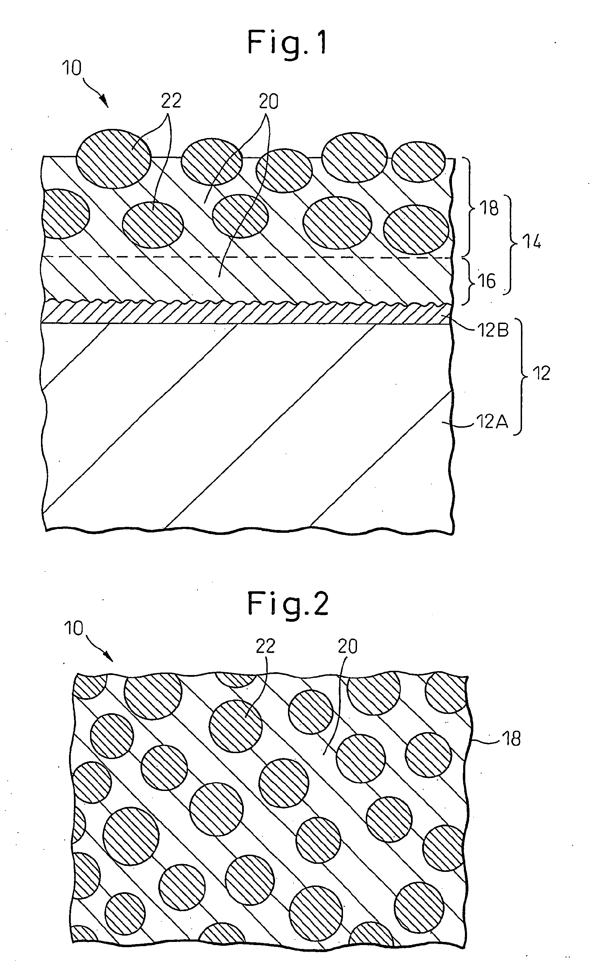

FIG. 1 shows an example of the structure of a part equipped with an oil-repellent coating according to a preferred embodiment of the present invention.

An illustrated part 10 equipped with an oil-repellent coating of the present invention is comprised of a metal base material 12 on the surface of which an oil-repellent coating 14 is provided. The metal base material 12 is made a roughened layer 12B by roughening of the coating forming surface of a base material body 12A to raise the adhesion of the oil-repellent coating 14.

The oil-repellent coating 14 is comprised of a bottom layer 16 formed by PES 20 adhered to the surface of the base material 12 and a top layer 18 formed by dispersion of discrete phases 22 of FEP in a continuous phase 20 of PES integrally formed with the PES 20 of this bottom layer 16. The top layer 18 is exposed as the surface of the oil-repellent coating 14.

FIG. 2 is a plan view showing the surface of the oil-repellent coating 14. As illustrated, the surface of the oil-repellent coating 14 is configured by the top layer 18 as it is or by the FEP discrete phases 22 dispersed in the PES continuous phase 20. The oil droplets sticking to this surface can be easily made to slide off by the co-action of the oil droplets being lifted up by the FEP discrete phases 22 and pulled by the PES continuous phase 20.

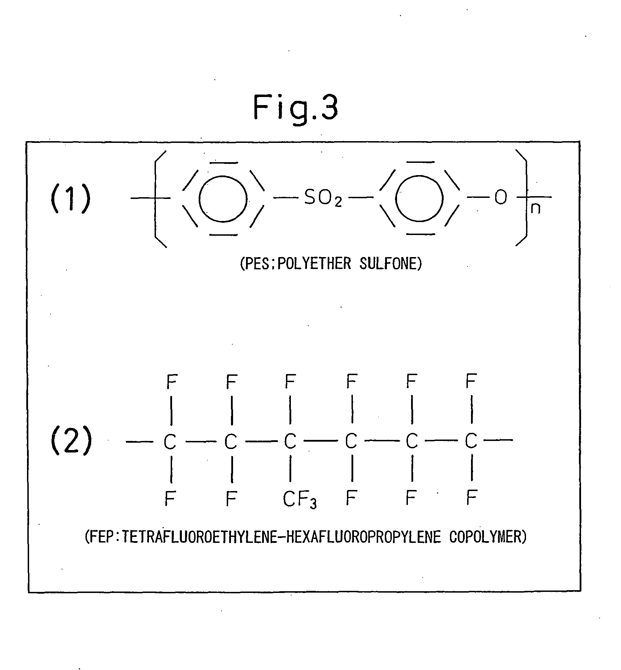

FIG. 3 shows the structures of (1) PES (polyether sulfone) and (2) FEP (tetrafluoroethylene-hexafluoropropylene copolymer). The PES has a high lipophilicity and excellent adhesion with the base material metal. On the other hand, the FEP has a molecular structure of CF₂ and CF₃ cross-linked, therefore the surface tension is about 7 dyne/cm or a small value in comparison with the surface tension 17 to 22 dyne/cm of the gasoline, diesel oil, or the lubricating oil from which the oil droplets are derived, therefore has oil-repellency.

The metal base material 12 does not have to be particularly limited, but in the case of a fuel injector of an internal combustion engine, a ferrite-based stainless steel, austenite-based stainless steel, high chromium molybdenum steel, aluminum alloy, etc. are representative.

The method of roughening the surface of the base material 12 to form the roughened layer 12B on the base material body 12A also does not have to be particularly limited, but shot blasting using fine hard particles of alumina etc. or this plus etching by chemical treatment using oxalic acid etc. are suitable.

### EXAMPLES

### [Example 1]

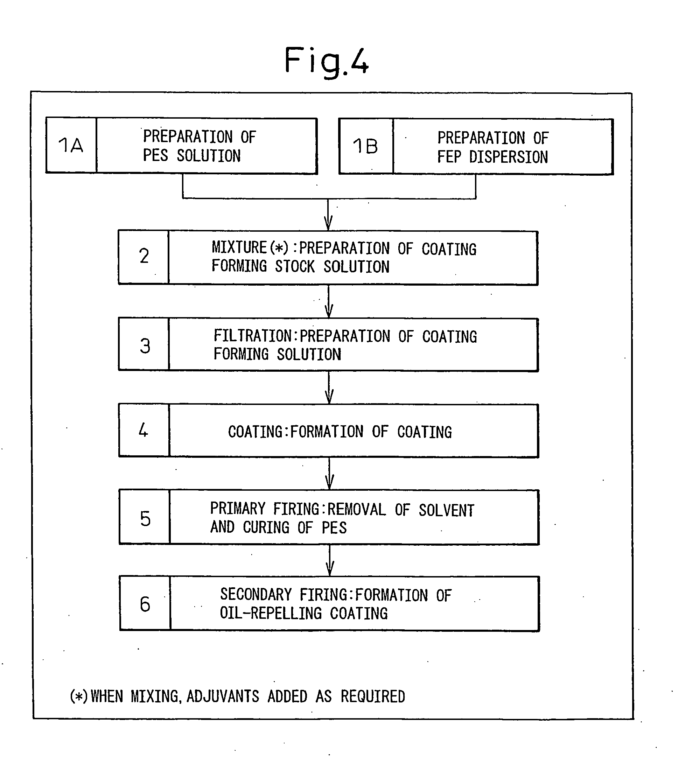

An example of producing a part provided with an oil-repellent coating of the present invention by the method of the present invention will be explained by the steps shown in FIG. 4 (1A/1B → 2 → 3 → 4 → 5 → 6).

### [Step 1A: Preparation of PES Solution]

First, at step 1A, a PES solution is prepared. A stainless steel vessel is charged with a prescribed amount of DMF (dimethyl formamide) as a particle size adjuster, then a prescribed amount of a powder of PES (polyether sulfone) is charged, then a dispersion stirrer etc. is used to stir the two for 30 minutes or more to completely dissolve the PES. At that time, as the solvent for dissolution, NMP (N-methyl-2-pyrrolidone) or DMAC (dimethyl acetoamide) may be used.

### [Step 1B: Preparation of FEP Dispersion]

On the other hand, at step 1B, an FEP solution is prepared. A stainless steel vessel is charged with a prescribed amount of FEP powder, then a fluorine-based surfactant is charged, then butyl cellosolve is charged. The FEP powder used is fine powder having primary particle size of about 1 µm, therefore easily agglomerates. In order to avoid this, as a separator, use is made of butyl cellosolve. Further, a fluorine-based surfactant is used for promoting separation. The desirable amounts of these three ingredients are, for example, by wt%, 15.00 of FEP powder, 84.250 of butyl cellosolve, and 0.750 of fluorine-based surfactant.

After charging the above three ingredients, a dispersion stirrer etc. is used for pre-dispersion.

Next, the main dispersion is performed. The main dispersion is performed by using a ball mill disperser, a sand mill disperser, a beads mill disperser, or the like so that a degree of dispersion evaluated according to measurement of the distribution of the particle size and measurement of the numerical distribution becomes a degree of dispersion where particles having sizes of 2.5 µm or less occupy 80% or more of the number of particles.

### [Step 2: Mixing = Preparation of Coating Forming Stock Solution]

The PES solution and the FEP dispersion prepared in the above steps 1A and 1B are charged into a stainless steel vessel and mixed and dispersed by using a dispersion stirrer or the like to form a coating forming stock solution.

### [Step 3: Preparation of Coating Forming Solution]

The above coating forming stock solution is filtered by a stainless steel mesh #200 to form a coating forming solution.

### [Step 4: Coating = Formation of Coating]

The surface of a degreased metal base material is coated with the above coating forming solution. The coating can be performed by an air spray gun etc. In order to raise the adhesion of the coating, the surface of the metal base material can be previously roughened before the coating. The roughening is carried out by shot blasting using fine hard particles of alumina etc., this plus chemical treatment (chemical etching) further using oxalic acid etc. with this, and so on as mentioned before.

### [Step 5: Primary Firing = Removal of Solvent and PES Curing]

The base material after formation of the coating is fired by primary firing to remove the DMF by evaporation and simultaneously the PES is cured. Due to this, the adhesion with the surface of the base material is generated. As conditions of the primary firing, a temperature of about 80 to 180°C and a time of about 30 minutes are suitable. The atmosphere of the primary firing may be in the atmospheric air.

### [Step 6: Secondary Firing = Formation of Oil-Repellent Coating]

The primary fired base material is fired by secondary firing to soften the FEP in the coating to cause flow and dispersion in the film. Due to this, an oil-repellent coating comprised of a bottom layer formed by only PES and a top layer formed by discrete phases (particles) of FEP dispersed in a continuous phase of PES integral with the bottom layer PES is formed.

The PES and the FEP do not have phase-solubility, therefore they are clearly separated into two phases of a PES phase and a FEP phase. The conditions of the secondary firing are a temperature suitable for the softening of the FEP and flow and dispersion and a time long enough to clearly form the bottom layer and the top layer. Typically, a temperature of about 350 to 380°C and a time of about 30 minutes are suitable. The atmosphere of the secondary firing may be the atmospheric air.

The surface of the obtained oil-repellent coating is the surface of the top layer and has a surface structure of the constitution of the top layer as it is but with discrete phases (particles) of FEP dispersed in the continuous phase of the PES. The dispersion of FEP particles is very high in density and high in dispersion. Typically, fine FEP particles having grain sizes of about 0.5 µm to 5 µm are dispersed at intervals equivalent to the particle sizes.

The oil droplets on an oil-repellent coating having such a surface structure are lifted up due to the oil repellency of the fine FEP phase having a high density and high dispersion and simultaneously can easily slide off driven by the tensile force received from the lipophilic PES phase exposed between FEP particles.

Oil droplets of gasoline, diesel oil, lubricating oil, etc. used in an internal combustion engine of an automobile engine etc. typically have a size of approximately 10 µm, therefore, as mentioned before, when the sizes and intervals of FEP particles are 0.5 to 5 µm, individual oil droplets simultaneously contact the FEP phase and the PES phase on the surface of the oil-repellent coating and receive the co-action the "lift by FEP" + "tension by PES" described above.

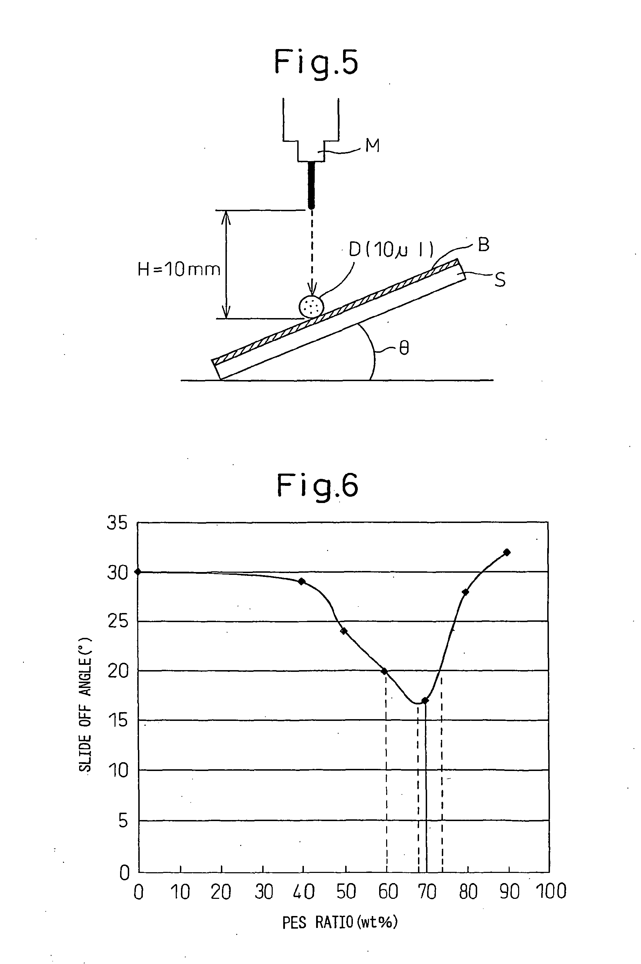

Metal base materials were formed with oil-repellent coatings according to the above sequence while changing the ratio between the PES and FEP in various ways and were measured for slide off angles θ for diesel oil. The test apparatus is shown in FIG. 5. Oil droplets D were dropped onto the oil-repellent coatings B of sample base sheets S from a position of a height H = 10 mm by a MICRO SYRINGE M. The MICRO SYRINGE M was adjusted so that the size of the oil droplets D became 10 µm. The inclination angle θ of the sample base sheets S when the oil droplets D started sliding off from the oil-repellent coatings B having various the PES:FEP ratios was defined as the slide off angle. The results are shown in Table 1 and FIG. 6.

**Table 1**

| PES wt% | Slide off angle (°) |
|---|---|
| 100 | (*) |
| 90 | 32 |
| 80 | 28 |
| 70 | 17 |
| 60 | 20 |
| 50 | 24 |
| 40 | 29 |
| 0 | 30 |

| | |
|---|---|
| (*) Diffused in liquid film state | |

In the real data shown in Table 1, the minimum value of the slide off angle θ = 17° is obtained in a case where the PES ratio 70 wt%, that is, PES wt%: FEP wt% = 70:30. When viewing the change of the slide off angle (°) with respect to the PES ratio (wt%) from FIG. 6, there is a downward peak with a minimum value near 67 to 68 wt% of the PES extending over a range of the PES ratio of 40 wt% to 80 wt% (PES wt%:FEP wt% = 40:60 to 80:20). Namely, within this range of the PES ratio, the effect of reduction of the slide off angle due to co-action of FEP and PES is confirmed. Further, it is seen that for example the slide off angle θ ≤ 20°stands in a case where the PES ratio is generally within a range of 60 wt% to 75 wt% (PES wt%:FEP wt% = 60:40 to 75:25).

### [Example 2]

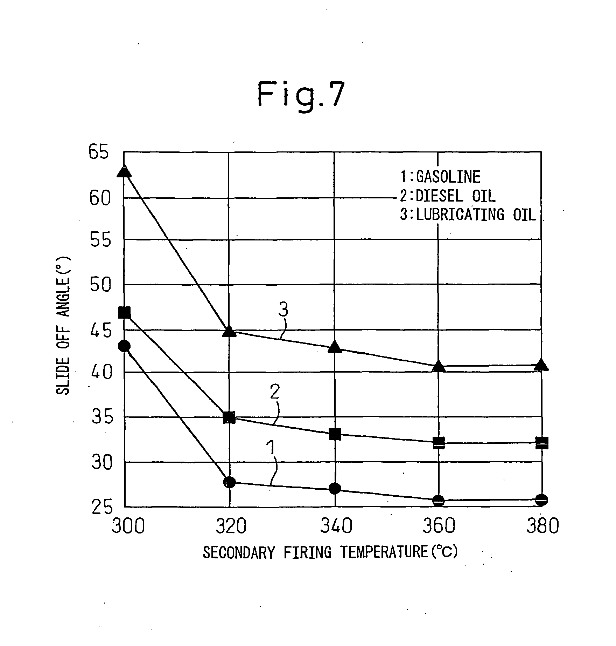

In the method of production explained in Example 1, the oil-repellent coatings were formed by setting the constant PES wt%:FEP wt% = 50:50 and changing the secondary firing temperature in various ways within a range of 300°C to 380°C. Samples given the oil-repellent coatings in this way were measured by the same test method as in Example 1 to determine the slide off angles with respect to oily media of (1) gasoline, (2) diesel oil, and (3) lubricating oil. FIG. 7 shows the relationship between the secondary firing temperature and the slide off angle. In the cases of all of the media, along with the rise of the secondary firing temperature from 300°C, the slide off angle becomes smaller, but it is seen that this change is saturated and becomes substantially constant when the secondary firing temperature is 350°C or more. The reason for this is considered to be a completion of the high density and high dispersion state of FEP particles according to two-phase separation when the secondary firing temperature becomes 350°C or more.

### [Example 3]

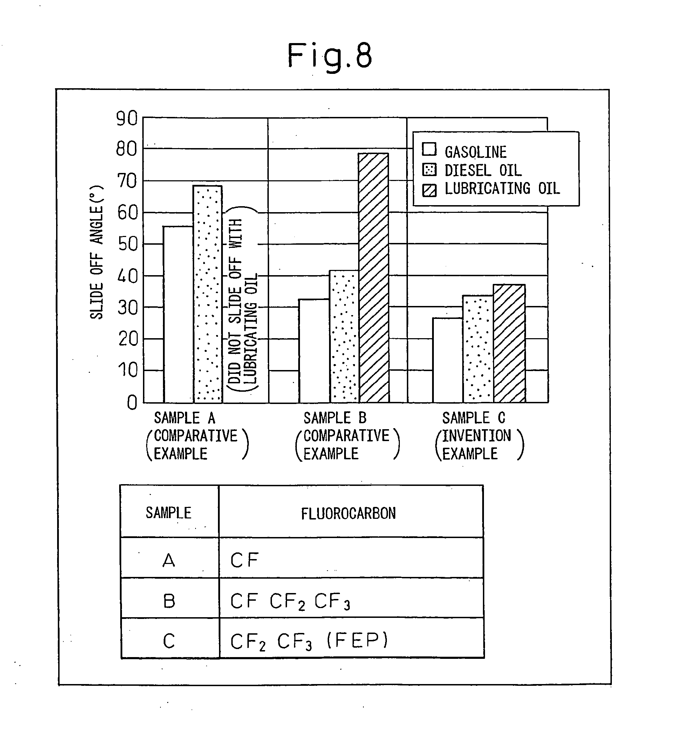

An oil-repellent coating was formed under the same conditions as those in Example 2. Note that in place of the FEP of the present invention, that is, a CF₂CF₃-based fluorocarbon, for comparison, use was made of a CF-based fluorocarbon and CFCF₂CF₃-based fluorocarbon. According to the same test method as that in Example 1, slide off angles with respect to three types of oily media of the gasoline, diesel oil, and lubricating oil were measured. The results are summarized in FIG. 8.

From the results of FIG. 8, the sample A of the comparative example using a CF-based fluorocarbon had the largest slide off angle. In particular, the droplets did not slide off in the case of the lubricating oil. The sample B of the comparative example using a CFCF₂CF₃-based fluorocarbon was lowered in the slide off angle in comparison with the sample A. However, it is seen that the sample C of an example of the present invention using a CF₂CF₃-based fluorocarbon (FEP) is remarkably lowered in the slide off angle even more than the sample B.

### [Example 4]

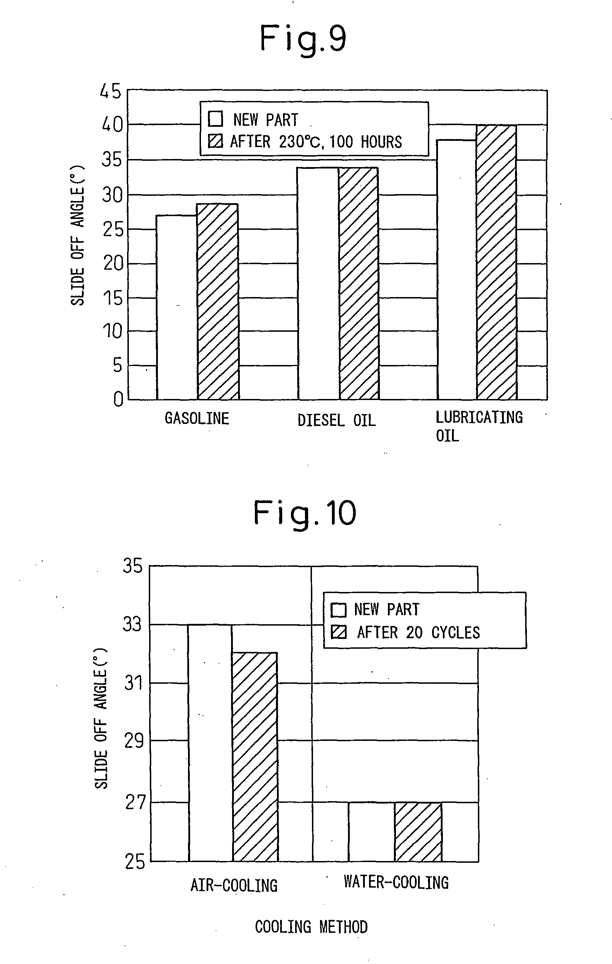

A sample of this example of the present invention formed with an oil-repellent coating in the same way as Example 2 was prepared and checked for durability at a high temperature. A sample continuously heated in the atmospheric air at 230°C for 100 hours and an unheated new sample were measured for slide off angles with respect to three types of oily media of gasoline, diesel oil, and lubricating oil by the same test method as that in Example 1. The results are summarized in FIG. 9.

From the results of FIG. 9, for all media, the difference of the slide off angle after heating from the new product was within the range of measurement error. No significant difference was confirmed. Namely, it was seen that the oil-repellent coating of the present invention could remain effective with no problem at a temperature of about 230°C.

### [Example 5]

A sample of this example of the present invention formed with an oil-repellent coating in the same way as Example 2 was prepared and checked for heat shock resistance. A sample obtained by 20 heating/cooling cycles of heating in the atmospheric air at 230°C for 15 minutes, then air cooling or water cooling (dipping in water at 23°C) and a new sample were measured for the slide off angle with respect to the diesel oil by the same test method as that in Example 1. The results are summarized in FIG. 10.

From results of FIG. 10, in both the cases of air cooling and water cooling, the difference of slide off angle from the new product after 20 heating/cooling cycles was within the range of measurement error. No significant difference was confirmed. Namely, it was seen that damage such as cracks and peeling did not occur in the oil-repellent coating due to heat shock, and the film had a good heat shock resistance.

Note that, in FIG. 10, the slide off angle of a new product not subjected to a heat cycle differs between air cooling and water cooling for the following reason. Namely, there is a difference in the specifications of a film used for air cooling and a film used for water cooling. The surface of the base material used for air cooling is limited to one which is shot blasted, while the surface of the base material used for water cooling is limited to one polished by emery paper in the slide off direction, but the slide off angle becomes smaller than that by the shot blasting.

### INDUSTRIAL APPLICABILITY

According to the present invention, parts provided with oil-repellent coatings having an oil repellency large enough for smooth slide off of the droplets of fuel and lubricating oil from the surface in the vicinity of injection ports of fuel injectors and a method of production of the same are provided.

## Claims

1. A part comprised of a metal base material on the surface of which an oil-repellent coating is provided,
said part provided with an oil-repellent coating **characterized in that** said oil-repellent coating is constituted by a bottom layer of PES adhered to a surface of the base material and a top layer formed by a dispersion of discrete phases of FEP in a continuous phase of PES integrally formed with the PES of the bottom layer and **in that** the top layer is exposed as the surface of the oil-repellent coating.

2. A part provided with an oil-repellent coating as set forth in claim 1, wherein a weight ratio PES wt%:FEP wt% of the PES and FEP forming said oil-repellent coating is 40:60 to 80:20.

3. A part provided with an oil-repellent coating as set forth in claim 2, wherein PESwt%:FEP wt% is 60:40 to 75:25.

4. A part provided with an oil-repellent coating as set forth in any one of claims 1 to 3, wherein the surface of said base material is roughened so as to raise the adhesion with the bottom layer of said PES.

5. A method of production of a part as set forth in any one of claims 1 to 4, said method of production of a part provided with an oil-repellent coating including:
a step of dissolving a PES powder in an organic solvent to prepare a PES solution;
a step of dispersing an FEP powder in an organic solvent to prepare an FEP dispersion;
a step of mixing said PES solution and said FEP dispersion to prepare a coating forming solution;
a step of filtering said coating forming solution;
a step of coating said filtered coating forming solution on the surface of the metal base material to form a coating;
a step of applying primary firing to said coating to remove the solvent in the coating by evaporation and curing the PES in the coating; and
a step of applying secondary firing to said primary fired coating to soften the FEP in the coating and cause the fluid from a bottom part to a top part of the coating to thereby form an oil-repellent coating constituted by a bottom layer made of said PES and a top layer in which discrete phases of FEP are dispersed in a continuous phase of said PES integrally formed with the PES of the bottom layer and having the top layer exposed as the surface.

6. A method of production as set forth in claim 5, wherein a mixing ratio of said PES solution and said FEP dispersion is made a mixing ratio whereby a weight ratio PES wt%:FEP wt% in the obtained coating forming solution becomes 40:60 to 80:20.

7. A method of production as set forth in claim 6, wherein a mixing ratio is made a mixing ratio whereby PES wt%:FEP wt% becomes 60:40 to 75:25.

8. A method of production as set forth in any one of claims 5 to 7, wherein the secondary firing is carried out at a temperature of 350°C or more.

9. A method of production as set forth in any one of claims 5 to 8, further comprising roughening the surface of said metal base material, then coating said coating forming solution.

10. A method of production as set forth in claim 6, wherein said roughening is carried out by shot blasting or shot blasting, then chemical etching.
